# EUROPEAN PATENT SPECIFICATION

(11) **EP 4 458 686 B1**
(45) Date of publication and mention of the grant of the patent: **20.08.2025**
(21) Application number: 23382410.1
(22) Date of filing: 03.05.2023
(51) Int. Cl.: B65B 1/06, B65B 1/28, F16K 7/06, B65B 1/32, B65B 39/00, B65B 39/04, B65G 53/46, B65B 31/04, B65B 39/02, B65B 1/26, B65B 9/207, B65B 39/12

(54) **A DEVICE FOR REMOVING POWDERY PARTICLES OF A MACHINE FOR FILLING A BAG AND CORRESPONDING MACHINE AND METHOD**
VORRICHTUNG ZUM ENTFERNEN VON PULVERTEILCHEN EINER MASCHINE ZUM FÜLLEN EINES BEUTELS UND ENTSPRECHENDE MASCHINE UND VERFAHREN
DISPOSITIF D'ÉLIMINATION DE PARTICULES PULVÉRULENTES D'UNE MACHINE DE REMPLISSAGE DE SAC ET MACHINE ET PROCÉDÉ CORRESPONDANTS

(43) Date of publication of application: 06.11.2024
(73) Proprietor: Tecnicas Mecanicas Ilerdenses, S.L., 25190 Lleida (ES)
(72) Inventor: Almenara Lladonosa, Jordi, 25190 Lleida (ES); Arderiu Cabau, Xavier, 25190 Lleida (ES)
(74) Representative: Curell Suñol S.L.P.

(56) References cited:
- EP-A1- 4 155 218
- US-A- 3 467 151

## Description

### Field of the invention

The invention relates to a device for removing powdery particles of a machine for filling a bag with a product comprising at least powdery particles, said device comprising: a supply duct extending along a longitudinal direction between an inlet end and an outlet end and defining an inner volume, said supply duct being configured for receiving a filling mouth of said bag at said outlet end in a fitted manner.

The invention furthermore relates to a machine comprising the device for removing powdery particles according to the invention and to a method removing powdery particles of the machine for filling a bag with a product comprising at least powdery particles.

### State of the art

Machines for filling bags with a product in an automated manner, and particularly granular products comprising powdery particles of even powdery products are known in the art. In the invention, a granular product is understood to be a product with a grain size larger than 500 micrometers. Therefore, a powdery particle according to the invention is particle size of equal or less than 500 micrometers.

There are many industries that package their products (plastic pellets, fertilizers, sugar, etc.) in bags or bags made of plastic or raffia, containers having similar characteristics, presented in metered amounts with a capacity of 25 kg. Typically, these products are either powdery or granular products containing a large amount of powdery particles.

During the filling process and later closing step of the bag it can easily occur that the powdery part of the product escapes from the supply duct of the machine and gets suspended in the supply duct or the environment of the machine working area. These suspended powdery particles finally accumulate inside the supply duct or fall on the ground, thus leading to hygienic problems.

In industries such as food, pharma or chemical industries, this can be a relevant problem, since cleanliness of the filling process is of much importance.

One first approach to this problem is to cause a suction in the inner volume of the supply duct once the bag is full. However, this technique does not always lead to satisfactory results according to the quality standards of these industries.

Another problem inherent to this approach is that often, although a suction is caused in the inner volume of the supply duct, still a fraction of the powdery part of the product remains stuck in the inner surface of the supply duct. This accumulation of powdery particles eventually forms a crust that can flake off uncontrollably.

Moreover, in the case of facilities used for packing different products in bags, the accumulation of powdery particles in the inside of the supply duct can make the cleaning of the device more complicated and facilitates cross-contamination between batches. Known methods and devices for filling powdery products are exemplarily described in EP 4 155 218 A1 and US 3 467 151 A. EP 4 155 218 A1 discloses a device for filling a bag with a granular product, said device comprising: supply conduit extending along a longitudinal direction between a first inlet end and a second outlet end and defining an inner volume, said supply duct being configured for receiving a filling mouth of said bag at said outlet end, wherein that the supply conduit comprises between said first and second ends an elastically deformable section and obstruction means, arranged with respect to said deformable section such that they are movable between an open position, and closing position, in which said closing means compress said deformable section to reduce the inner cross section of said deformable section, wherein the device further comprises an air removal device arranged in fluid communication with said inner volume of said supply conduit, intended to draw a vacuum from the bag.

### Summary of the invention

It is an object of the invention to provide a device for removing powdery particles of a machine for filling a bag with a product comprising at least powdery particles of the type indicated above that reduces the accumulation of powdery particles both inside the supply duct, as well as in the working area of the machine for filling the bag.

This purpose is achieved by the subject-matters of the independent claims.

According to the invention, the bag is filled up with the closing means in open position, in other words, the second section remains undeformed. During the filling process the powder particles are spread all over the inner volume of the supply duct. Only when the bag is filled up, then the closing means move from the open position into a closed position that reduces the inner cross section of the supply duct. At least in this moment the suction means are actuated to remove the dust formed by the powdery particles inside the supply duct.

Although it is not essential for the invention, the suction means are preferably actuated when the bag has been removed from the outlet end. However, it is also possible to exert a light suction once the bag is filled up, but still arranged on the outlet end of the supply duct.

Further, another advantage of the invention is that the deformation of the second section causes the first bellows section to deform in length in the longitudinal direction.

All these deformations of the first bellows section and the second section reduces the risk of powdery particles to adhere to the inner walls of the duct. But additionally, the cross-section reduction at the second section increases the suction speed of suction means. This improves even further the suction power of the suction means inside the inner volume of the supply duct thus reducing the amount of suspended powdery particles contained therein.

Thanks to all these combined processes, when the bag is removed, almost no powdery particles leave the inside of the supply duct. Therefore, the environment of the machine is kept cleaner than the machines of the state of the art, in which only a suction is performed inside a rigid supply duct.

The invention further includes a number of preferred features that are object of the dependent claims and the utility of which will be highlighted hereinafter in the detailed description of an embodiment of the invention.

In an embodiment seeking to achieve a more compact machine said first bellows section is arranged upstream of said second section. Therefore, the linear actuators can be shorter, and the machine requires less space.

In a preferred embodiment said at least one first linear actuator is arranged to deform said first bellows section in length along said longitudinal direction to move said outlet end of said supply duct for the insertion and extraction of said outlet end in the mouth of the bag.

Also, to improve the positioning of the bag relative to the supply duct, the device further comprises a linear guide for guiding said outlet end of said supply duct, when said closing means move between said open and said first closing positions. This linear guide provides for a precise positioning of the outlet end of the supply duct because the outlet end of the supply duct cannot freely move.

In order to further reduce the exit of powdery particles, another preferred embodiment contemplates that said closing means, are movable between: an open position, at least a first closing position, in which said closing means compress said second section to reduce the inner cross section of said second section, and a second closing position in which said closing means compress said second section to close said second section. When the bag is removed from the outlet end and the suction is performed inside the duct, different intermediate closing positions can be adopted to increase or reduce the suction speed. However, to guarantee that no particle exits the supply duct, the second closing position is provided. When the supply duct is fully closed, even without suction it is impossible that powdery particles exit the supply duct, thus leading to the best hygienic results for the environment of the machine.

In another embodiment seeking to avoid any wrinkle formation on the surface of the second section, at least one second linear actuator is arranged to tighten said second section surface and to functionally cooperate with said closing means and said first linear actuator, such that at least a variation in length in longitudinal direction of said second section can be compensated, when said closing means move between said open and said first closing positions. Thanks to this second linear actuator the risk of adhesion in the inner surface of the supply duct is even further reduced.

For obtaining an easy-to-repair device, it is specially preferred that said second section is manufactured in an elastically deformable laminar material, to deform the second section in an easier manner. The laminar material may consist of an elastically deformable flexible sleeve assembled in the supply duct through fixing braces for fixing the sleeve to the rigid part of the duct.

The invention also has the objective of the device having a prolonged durability, but at the same time being optimized as to power consumption. To that end, in another embodiment, said second section is a tubular duct made of an elastomeric material with a wall thickness comprised between 1 and 3 mm. The smaller the thickness of the first section, the easier it is to deform it. As a result, consumption of the operation of the closing means is also reduced.

In another embodiment of the device said closing means comprises at least a first clamp movable between said open and closed positions of said closing means, said second section being arranged with respect to said first clamp such as to be deformed by said first clamp.

Alternatively said closing means comprises a second clamp, said first and second clamps being arranged facing one another, said first section being arranged between said first and second clamps, and said first and second clamps are movable with respect to one another between said open and closed positions of said closing means.

The first and second clamps are at least wider than the second section, such that all the width can be embraced. Preferably said first and second clamps are mounted such as to making a swinging or lineal movement between said open and closing positions. It is also preferable that the clamps rounded or round such as, among others a cylindrical roller, parelelepipedic iron with rounded edges or similar to avoid the risk of causing tension peaks on the surface the second section.

The invention also refers to a machine comprising a device for removing powdery particles.

Preferably, said machine is a form, fill, and seal (FFS) machine, and more preferably the supply duct is arranged vertically. However, it can also be a machine in which the bag is readily formed and fed into the machine from a bag storage area.

In an embodiment seeking to have a simple design, the machine comprises a machine frame and weighing means and said device is mounted on said machine frame, supported on said weighing means for weighing said product contained in said bag. This design is compact and has a simple maintenance work.

In an alternative embodiment the machine comprises a machine frame and weighing means and further comprises a hopper and a product supply device arranged to receive said product comprising at least powdery particles from said hopper, said product supply device being in communication with said supply duct to supply said product into said supply duct and said hopper and said product supply device are mounted on said machine frame, supported on said weighing means for weighing said product contained in said bag.

Examples of weighing devices could be one or several load cells sensors mounted between the machine frame and the main plate supporting the device according to the invention. Alternatively, there are other possibilities such as compression force transducers, compression and tension sensors or the like.

The invention also relates to a method for removing powdery particles of a machine for filling a bag with a product comprising at least powdery particles. The method comprises the steps of:
[a] providing a supply duct extending along a longitudinal direction between an inlet end and an outlet end and defining an inner volume, said supply duct being configured for receiving a filling mouth of said bag at said outlet end in a fitted manner,
[b] said supply duct further comprising between said first and second ends at least
   [bi] a first bellows section and
   [bii] an elastically deformable second section,
further providing:
[c] closing means, arranged to deform said second section,
[d] at least one first linear actuator arranged to deform said first bellows section in length along said longitudinal direction and to functionally cooperate with said closing means, and
[e] suction means arranged in fluid communication with said inner volume of said supply duct,
the method further comprising the steps of
[f] placing said filling mouth of said bag at said outlet end in a fitted manner,
[g] moving said closing means into an open position,
[h] filling up the bag with said product,
[i] moving said closing means at least into a first closing position, in which said closing means compress said second section to reduce the inner cross section of said second section,
[j] compensating with said first linear actuator at least a variation in length in the longitudinal direction of said second section, when said closing means move between said open and said first closing positions,
[k] operating said suction means for removing said powdery particles contained in said inner volume at least when said closing means are in said first closing position.

In a preferred embodiment said suctioning means are operated after said filling step is finished and before or after said bag is removed from said outlet end.

In an alternative embodiment, starting from said first closing position and while said suction means are operated and said bag is removed from said outlet end, said closing means are moved into a second closing position, in which said closing means compress said second section to sealingly close said second section.

Finally, in another embodiment, the method further comprises the steps of providing at least one second linear actuator arranged to tighten said second section surface and to functionally cooperate with said closing means and compensate at least a variation in length in longitudinal direction of said second section, when said closing means move between said open and said first closing positions.

Likewise, the invention also includes other features of detail illustrated in the detailed description of an embodiment of the invention and in the accompanying figures.

### Brief description of the drawings

Further advantages and features of the invention will become apparent from the following description, in which, without any limiting character, preferred embodiments of the invention are disclosed, with reference to the accompanying drawings in which:
Figure 1 shows a schematic view of a machine for filling a bag with a granular product comprising a device according to the invention for removing air from a bag.
Figures 2 and 3 shows a schematic view of the device for removing air from a bag containing a granular product of Figure 1.
Figures 4 to 6 show schematic views of a first embodiment of the device according to the invention.
Figures 7 to 9 show schematic views of a second embodiment of the device according to the invention.
Figure 10 a flow diagram of the most general embodiment of the method according to the invention.

### Detailed description of embodiments of the invention

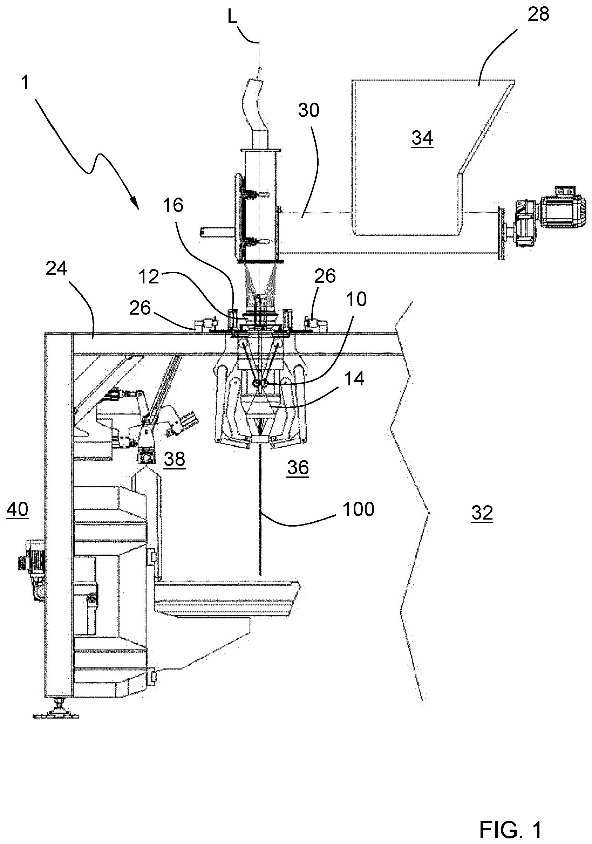

Figures 1 to 3 show a first embodiment of a machine 1 for filling a bag 100 with a product 104 comprising at least powdery particles. The machine 1 comprises a device 2 for removing powdery particles according to the invention.

The device according to the invention can be applied to any type of bagging machine. In particular, the machine 1 can be of the so-called type FFS (form, fill, and seal) machine for forming, filling, and sealing the bag 100, in which the bag is formed by the same machine 1. Alternatively, the bag can be ready formed and kept in a bag magazine from which the bagging machine can retrieve the bags during the filling process.

The machine 1 has a bag forming or storing area 32 where the bag 100 is either formed or stored, a supply area 34, a filling area 36, a sealing area 38 and finally an evacuation area 40 for evacuating a full bag 100.

In the case of an FFS machine, in the forming area 32, there is provided a spool of laminar or film-like material for supplying the laminar material from which the bag 100 is formed. Usually, this laminar material is a sheet of polymer or composite material, such as polyethylene, polypropylene, polyester, or composite materials with at least one metal foil such as aluminum foil, for example.

The machine 1 of Figure 1 further comprises a machine frame 24 and weighing means 26. The device 2 according to the invention is mounted on the machine frame 24, supported on the weighing means 24 for weighing the product 104 contained in the bag 100 during the filling process.

The machine 1 further comprises a hopper 28 and a product supply device 30, which in this case it is a worm screw, but other possibilities are also considered such as a conveyor belt. The supply device 30 is arranged to receive the product 104 comprising at least powdery particles from the hopper 28. Then the product supply device 30 is in communication with the supply duct 4 to supply the product 104 into the supply duct 4 for filling the corresponding bag 100.

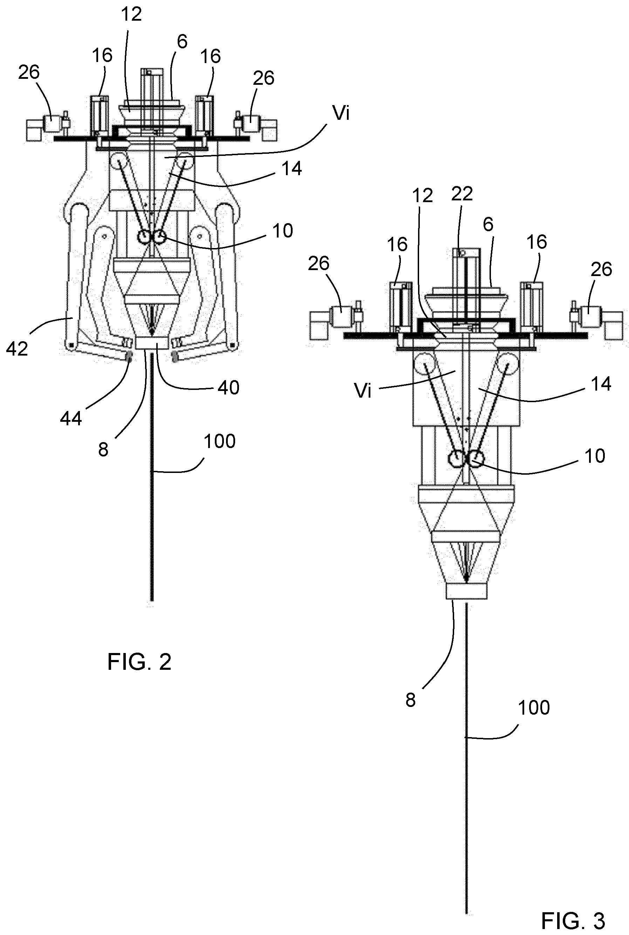

Now basing on Figures 2 and 3 the device 1 for removing powdery particles of the machine 1 for filling a bag 100 with a product 104 comprising at least powdery particles is explained.

The device 2 comprises a supply duct 4 extending along a longitudinal direction L between an inlet end 6 and an outlet end 8.

This supply duct 4 defines a variable inner volume Vi. As it is apparent from the figures, the supply duct 4 comprises a rigid mouthpiece 40 configured for receiving a filling mouth 102 of the bag 100 at the outlet end 8 in a fitted manner. To this end, the mouth 102 of the bag 100 is automatically inserted in the mouthpiece 40 thanks to the suction cups 44 provided in the swinging opening arms 42, which suction the bag walls to open the filling mouth 102.

Once the mouth 102 is open, the mouthpiece 40 can be inserted therein by descending the mouthpiece 40 from the position shown in Figure 2. Then, the swinging brackets 46 move from a remote position shown in Figure 2, to a clamping position (not shown). At this point the bag 100 can be held in a fitted manner, avoiding the powdery particles to exit the supply duct 4 during the filling process.

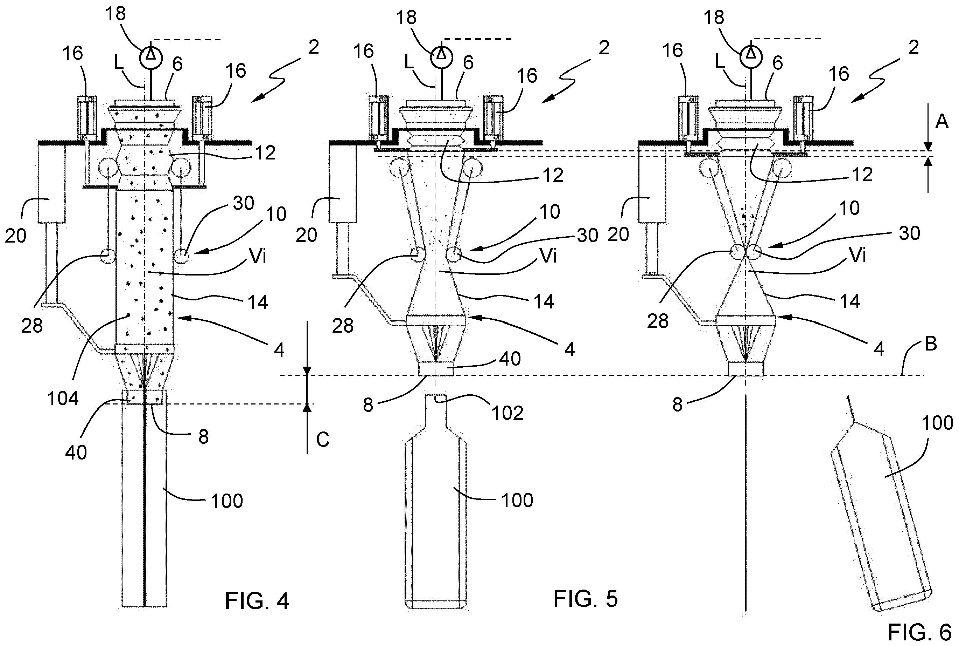

Figures 4 to 6 show a simplified first embodiment of the device 2 according to the invention and which shares most of the features of the device of figures 2 and 3. Therefore, for sake of simplicity reference is made form now on to these figures to continue with the detailed description of the device 2.

As it is apparent, the supply duct 4 of the device further comprises between said first and second ends 6, 8 at least a first bellows section 12 and an elastically deformable second section 14. In this embodiment the first bellows section 12 is arranged upstream of the second section 14. However, they could also be arranged the other way around. Both the first bellows section 12 and the second section 14 are manufactured in an elastically deformable laminar material with wall thicknesses comprised between 1 and 3 mm.

The device 2 further comprises closing means 10 in form of swinging rollers that are arranged with respect to the second section 14 such that they are movable between an open position shown in figure 4, during which the bag is filled with product 104, and a first closing position shown in figure 5. In this embodiment, the closing means 10 comprises a first clamp 28 movable between the open and closed positions of said closing means 10, said second section 14 being arranged with respect to said first clamp 28 such as to be deformed by the first clamp 28. closing means 10 comprises a first and a second clamps 28, 30, said first and second clamps 28, 30 being arranged facing one another, said second section 14 being arranged between the first and second clamps 28, 30, and the first and second clamps 18, 20 are movable with respect to one another between said open and closed positions of the closing means 10.

In this first closing position the closing means 10 compress the second section 14 to reduce the inner cross section thereof.

The device 2 also comprises two first linear actuators 16 arranged to deform the first bellows section 12 in length along the longitudinal direction L. They cooperate functionally with the closing means 10, such that at least a variation in length A in the longitudinal direction L of said second section 14 can be compensated, when the closing means 10 move between the open and the first closing positions. In Figures 5 and 6 the compensation of the variation in length A caused by the movement of the closing means 10 between two different closing positions has been indicated with two dotted lines, while with the dotted B it is indicated how between the position of figure 5 and 6, the mouth has not moved at all.

The device 2 further comprises suction means 18 arranged in fluid communication with the inner volume Vi of the supply duct 4. The suction means 18, such as a ventilator, a pump or the like, are operable for removing the powdery particles contained in the inner volume Vi at least when the closing means 10 are in the first closing position.

In this embodiment, the two first linear actuators 16 are further arranged to deform the first bellows section 12 in length along the longitudinal direction L to move the outlet end 8, and particularly the mouthpiece 40 of the supply duct 4, for the insertion and extraction of said outlet end in the mouth of the bag. This length variation has been indicated with reference C between figures 4 and 5.

Additionally, this device 2 further comprises a linear guide 20 for guiding the outlet end 8 of said supply duct 4, when the closing means 10 move between said open and said first closing positions as well as when the mouthpiece 40 moves to be inserted or extracted from the mouth 102 of the bag 100.

As it apparent from the figures, in this embodiment, the closing means 10, are further movable between: an open position (see Figure 4), at least a first closing position (see Figure 5), in which the closing means 10 compress the second section 14 to reduce the inner cross section of the second section 14, and a second closing position (see Figure 6) in which the closing means 10 compress the second section 14 to close the second section 14 thus avoiding the even if no suction is applied, the powdery particles can exit through the outlet end 8.

Thanks to the device 2 described a method for removing powdery particles of the machine 1 for filling a bag 100 with a product 104 comprising at least powdery particles can be put into practice.

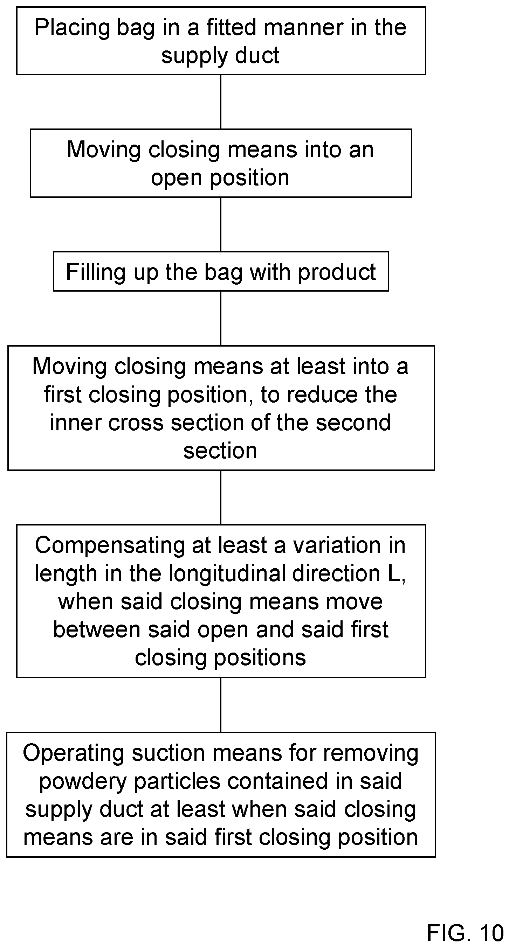

Once all the elements of the device 2 have been provided, the method further comprises the following steps shown in Figure 10.

First the filling mouth 102 of the bag 100 is placed around the mouthpiece 40 of the outlet end 8 in a fitted manner as explained above with the first linear actuators 16. The closing means 10 are moved into the open position shown in Figure 4. Then the bag 100 is filled up with the product 104 until the final desired weight is achieved.

From this moment, the closing means 10 are arranged into the first closing position of Figure 5, in which the closing means 10 compress the second section 14 to reduce the inner cross section thereof. By doing this, the first linear actuators 16 compensate the variation in length in the longitudinal direction L of the second section 14, when the closing means 10 move between the open and the first closing positions.

At least when the closing means 10 are in the first closing position the suction means 18 are operated for removing the powdery particles contained in said inner volume Vi. It must be pointed out that the suction step can be performed when bag 100 is still placed in the mouthpiece 40, or direct after the brackets 46 have opened and the bag is being removed. Therefore, the suctioning means 18 are operated after the filling step is finished and before or after said bag 100 is removed from the outlet end 8. In the first case, the suction force must be controlled in order to avoid the creation of a too hard depression in the supply duct 4.

In the method according to Figures 4 to 6, starting from the first closing position and while said suction means 18 are still operated and the bag 100 is removed from the outlet end 8, the closing means 10 are moved into the second closing position, in which said closing means 10 compress the second section 14 to sealingly close the second section 14. Doing this no powder at all is spread around the machine.

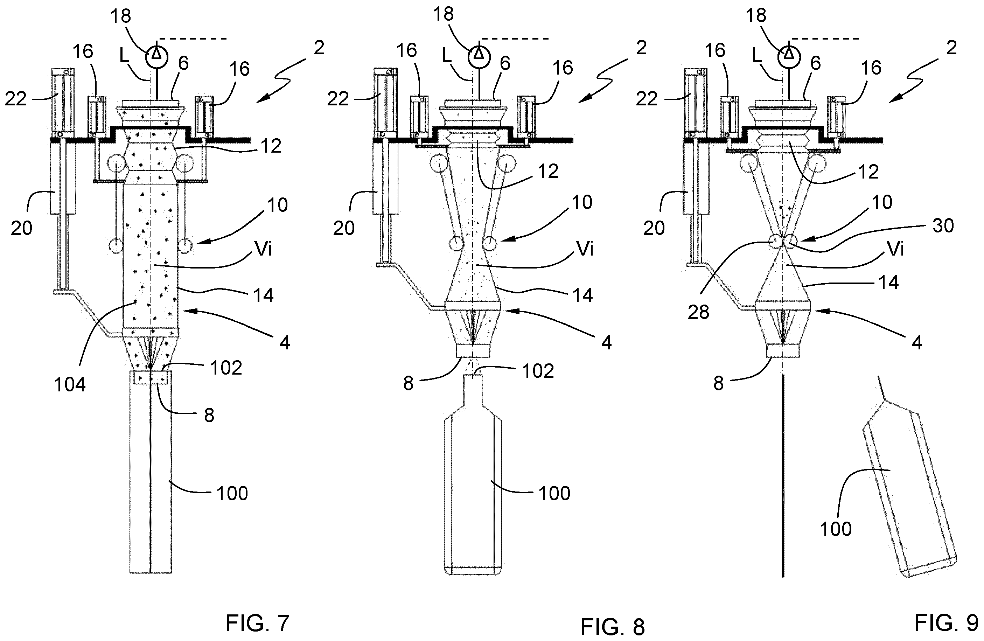

Finally, Figures 7 to 9 show a second embodiment of the device 2 according to the invention. In this case, instead of using the first linear actuators 16 to position the mouthpiece 40, a second linear actuator 22 is arranged to control the position of the mouthpiece 40 and to tighten the second section 14 surface and to functionally cooperate with said closing means 10 and said first linear actuator 16, such that at least a variation in length in longitudinal direction L of the second section 14 can be compensated, when the closing means 10 move between the open and the first closing positions.

This device provides for an evolved method according to which a further compensation step is provided, in which at least a variation in length in longitudinal direction L of the second section 14, when the closing means 10 move between the open and said first closing positions.

Finally in a machine embodiment not shown in detail in the figures, the machine comprises a machine frame and weighing means 26 and further comprises a hopper 28 and a product supply device 30 arranged to receive said product 104 comprising at least powdery particles from said hopper 28, said product supply device 30 being in communication with said supply duct 4 to supply said product 104 into said supply duct 4 and in that said hopper 28 and said product supply device 30 are mounted on said machine frame 24, supported on said weighing means for weighing said product 104 contained in said bag 100. In this embodiment que filling quantity of the sack is obtained by the loss of weight of the batch contained in the hopper 28.

## Claims

1. A device (2) for removing powdery particles of a machine (1) for filling a bag (100) with a product (104) comprising at least powdery particles, said device (2) comprising:
[a] a supply duct (4) extending along a longitudinal direction (L) between an inlet end (6) and an outlet end (8) and defining an inner volume (Vi), said supply duct (4) being configured for receiving a filling mouth (102) of said bag (100) at said outlet end (8) in a fitted manner, wherein
[b] said supply duct (4) further comprises between said first and second ends (6, 8) at least
[bi] a first bellows section (12) and
[bii] an elastically deformable second section (14),
said device (2) further comprising:
[c] closing means (10), arranged with respect to said second section (14) such that they are movable between:
[ci] an open position, and
[cii] at least a first closing position, in which said closing means (10) compress said second section (14) to reduce the inner cross section of said second section (14),
[d] at least one first linear actuator (16) arranged to deform said first bellows section (12) in length along said longitudinal direction (L) and to functionally cooperate with said closing means (10), such that at least a variation in length in the longitudinal direction (L) of said second section (14) can be compensated, when said closing means (10) move between said open and said first closing positions and
[e] suction means (18) arranged in fluid communication with said inner volume (Vi) of said supply duct (4), operable for removing said powdery particles contained in said inner volume (Vi) at least when said closing means (10) are in said first closing position.

2. The device (2) of claim 1, **characterized in that** said first bellows section (12) is arranged upstream of said second section (14).

3. The device (2) of claims 1 or 2, **characterized in that** it further comprises a linear guide (20) for guiding said outlet end (8) of said supply duct (4), when said closing means (10) move between said open and said first closing positions.

4. The device (2) of any of claims 1 to 3, **characterized in that** said closing means (10), are movable between:
[ai] an open position,
[aii] at least a first closing position, in which said closing means (10) compress said second section (14) to reduce the inner cross section of said second section (14), and
[aiii] a second closing position in which said closing means (10) compress said second section (14) to close said second section (14).

5. The device (2) of any of claims 1 to 4, **characterized in that** at least one second linear actuator (22) is arranged to tighten said second section (14) surface and to functionally cooperate with said closing means (10) and said first linear actuator (16), such that at least a variation in length in longitudinal direction (L) of said second section (14) can be compensated, when said closing means (10) move between said open and said first closing positions.

6. The device (2) of any claims 1 to 5, **characterized in that** said second section (14) is manufactured in an elastically deformable laminar material.

7. The device (2) according to any of claims 1 to 6, **characterized in that** said closing means (10) comprises at least a first clamp (28) movable between said open and closed positions of said closing means, said second section (14) being arranged with respect to said first clamp (28) such as to be deformed by said first clamp (28).

8. The device (2) according to claim 7, **characterized in that** said closing means (10) comprises a second clamp (30), said first and second clamps (28, 30) being arranged facing one another, said second section (14) being arranged between said first and second clamps (28, 30), and **in that** said first and second clamps (18, 20) are movable with respect to one another between said open and closed positions of said closing means (10).

9. A machine (1) for filling a bag (100) with a product (104) comprising at least powdery particles, **characterized in that** it comprises a device (2) for removing powdery particles according to any one of claims 1 to 8.

10. The machine (1) of claim 9, **characterized in that** it comprises a machine frame (24) and weighing means (26) and **in that** said device (2) is mounted on said machine frame (24), supported on said weighing means (24) for weighing said product (104) contained in said bag (100).

11. The machine (1) of claim 9, **characterized in that** it comprises a machine frame and weighing means (26) and further comprises a hopper (28) and a product supply device (30) arranged to receive said product (104) comprising at least powdery particles from said hopper (28), said product supply device (30) being in communication with said supply duct (4) to supply said product (104) into said supply duct (4) and **in that** said hopper (28) and said product supply device (30) are mounted on said machine frame (24), supported on said weighing means for weighing said product (104) contained in said bag (100).

12. A method for removing powdery particles of a machine (1) for filling a bag (100) with a product (104) comprising at least powdery particles, wherein the method comprises the steps of:
[a] providing a supply duct (4) extending along a longitudinal direction (L) between an inlet end (6) and an outlet end (8) and defining an inner volume (Vi), said supply duct (4) being configured for receiving a filling mouth (102) of said bag (100) at said outlet end (8) in a fitted manner,
[b] said supply duct (4) further comprising between said first and second ends (6, 8) at least
[bi] a first bellows section (12) and
[bii] an elastically deformable second section (14),
further providing:
[c] closing means (10), arranged to deform said second section (14),
[d] at least one first linear actuator (16) arranged to deform said first bellows section (12) in length along said longitudinal direction (L) and to functionally cooperate with said closing means (10), and
[e] suction means (18) arranged in fluid communication with said inner volume (Vi) of said supply duct (4),
the method further comprising the steps of
[f] placing said filling mouth (102) of said bag (100) at said outlet end (8) in a fitted manner,
[g] moving said closing means (10) into an open position,
[h] filling up the bag (100) with said product (104),
[i] moving said closing means (10) at least into a first closing position, in which said closing means (10) compress said second section (14) to reduce the inner cross section of said second section (14),
[j] compensating with said first linear actuator (16) at least a variation in length in the longitudinal direction (L) of said second section (14), when said closing means (10) move between said open and said first closing positions,
[k] operating said suction means (18) for removing said powdery particles contained in said inner volume (Vi) at least when said closing means (10) are in said first closing position.

13. The method of claim 12, **characterized in that** said suctioning means (18) are operated after said filling step is finished and before or after said bag (100) is removed from said outlet end (8).

14. The method of claim 12 or 13, **characterized in that** starting from said first closing position and while said suction means (18) are operated and said bag (100) is removed from said outlet end (8), said closing means (10) are moved into a second closing position, in which said closing means (10) compress said second section (14) to sealingly close said second section (14).

15. The method of any of claims 12 to 14, **characterized in that** it further comprises the steps of
[a] providing at least one second linear actuator (22) arranged to tighten said second section (14) surface and to functionally cooperate with said closing means (10) and
[b] compensate at least a variation in length in longitudinal direction (L) of said second section (14), when said closing means (10) move between said open and said first closing positions.

## Patentansprüche

1. Vorrichtung (2) zum Entfernen von pulverförmigen Partikeln einer Maschine (1) zum Befüllen eines Sackes (100) mit einem Produkt (104), das mindestens pulverförmige Partikel umfasst, wobei die Vorrichtung (2) Folgendes umfasst:
[a] einen Zuführkanal (4), der sich entlang einer Längsrichtung (L) zwischen einem Einlassende (6) und einem Auslassende (8) erstreckt und ein Innenvolumen (Vi) definiert, wobei der Zuführkanal (4) so ausgeführt ist, dass er eine Füllöffnung (102) des Sackes (100) am Auslassende (8) passend aufnehmen kann,
[b] wobei der Zuführkanal (4) zwischen dem ersten und zweiten Ende (6, 8) weiterhin mindestens
[bi] einen ersten Balgabschnitt (12) und
[bii] einen elastisch verformbaren zweiten Abschnitt (14) umfasst,
wobei die Vorrichtung (2) weiterhin Folgendes umfasst:
[c] Schließmittel (10), die in Bezug auf den zweiten Abschnitt (14) so angeordnet sind, dass sie zwischen
[ci] einer Offenstellung und
[cii] mindestens einer ersten Schließstellung beweglich sind, in der die Schließmittel (10) den zweiten Abschnitt (14) zusammendrücken, um dessen Innenquerschnitt zu verringern,
[d] mindestens einen ersten Linearantrieb (16), der dazu eingerichtet ist, den ersten Balgabschnitt (12) in Längsrichtung (L) zu verformen und funktional mit den Schließmitteln (10) zusammenzuwirken, sodass eine Längenänderung in Längsrichtung (L) des zweiten Abschnitts (14) ausgeglichen werden kann, wenn die Schließmittel (10) zwischen der Offenstellung und der ersten Schließstellung bewegt werden,
[e] Absaugmittel (18), die fluidisch mit dem Innenvolumen (Vi) des Zuführkanals (4) verbunden und zum Entfernen der im Innenvolumen (Vi) enthaltenen pulverförmigen Partikel zumindest bei befindlichen Schließmitteln (10) in der ersten Schließstellung betreibbar sind.

2. Vorrichtung (2) nach Anspruch 1, **dadurch gekennzeichnet, dass** der erste Balgabschnitt (12) stromaufwärts des zweiten Abschnitts (14) angeordnet ist.

3. Vorrichtung (2) nach Anspruch 1 oder 2, **dadurch gekennzeichnet, dass** sie weiterhin eine Linearführung (20) umfasst, die das Auslassende (8) des Zuführkanals (4) führt, wenn die Schließmittel (10) zwischen der Offenstellung und der ersten Schließstellung bewegt werden.

4. Vorrichtung (2) nach einem der Ansprüche 1 bis 3, **dadurch gekennzeichnet, dass** die Schließmittel (10) bewegbar sind zwischen
[ai] einer Offenstellung,
[aii] mindestens einer ersten Schließstellung, in der die Schließmittel (10) den zweiten Abschnitt (14) zusammendrücken, um dessen Innenquerschnitt zu verringern, und
[aiii] einer zweiten Schließstellung, in der die Schließmittel (10) den zweiten Abschnitt (14) zusammendrücken, um diesen zu verschließen.

5. Vorrichtung (2) nach einem der Ansprüche 1 bis 4, **dadurch gekennzeichnet, dass** mindestens ein zweiter Linearantrieb (22) vorgesehen ist, um die Oberfläche des zweiten Abschnitts (14) zu spannen und funktional mit den Schließmitteln (10) sowie dem ersten Linearantrieb (16) zusammenzuwirken, sodass eine Längenänderung in Längsrichtung (L) des zweiten Abschnitts (14) ausgeglichen werden kann, wenn die Schließmittel (10) zwischen der Offenstellung und der ersten Schließstellung bewegt werden.

6. Vorrichtung (2) nach einem der Ansprüche 1 bis 5, **dadurch gekennzeichnet, dass** der zweite Abschnitt (14) aus einem elastisch verformbaren laminierten Material hergestellt ist.

7. Vorrichtung (2) nach einem der Ansprüche 1 bis 6, **dadurch gekennzeichnet, dass** die Schließmittel (10) mindestens eine erste Klemme (28) umfassen, die zwischen der Offen- und Schließstellung der Schließmittel beweglich ist, wobei der zweite Abschnitt (14) in Bezug auf die erste Klemme (28) so angeordnet ist, dass er durch diese verformt wird.

8. Vorrichtung (2) nach Anspruch 7, **dadurch gekennzeichnet, dass** die Schließmittel (10) eine zweite Klemme (30) umfassen, wobei die erste und die zweite Klemme (28, 30) einander gegenüberliegend angeordnet sind, der zweite Abschnitt (14) zwischen der ersten und der zweiten Klemme (28, 30) angeordnet ist, und die erste und zweite Klemme (28, 30) zueinander beweglich zwischen der Offen- und Schließstellung der Schließmittel (10) sind.

9. Maschine (1) zum Befüllen eines Sackes (100) mit einem Produkt (104), das mindestens pulverförmige Partikel umfasst, **dadurch gekennzeichnet, dass** sie eine Vorrichtung (2) zum Entfernen von pulverförmigen Partikeln gemäß einem der Ansprüche 1 bis 8 umfasst.

10. Maschine (1) nach Anspruch 9, **dadurch gekennzeichnet, dass** sie einen Maschinenrahmen (24) und Wägeeinrichtungen (26) umfasst, wobei die Vorrichtung (2) auf dem Maschinenrahmen (24) montiert ist und auf den Wägeeinrichtungen (26) gelagert ist, um das im Sack (100) enthaltene Produkt (104) zu wiegen.

11. Maschine (1) nach Anspruch 9, **dadurch gekennzeichnet, dass** sie einen Maschinenrahmen und Wägeeinrichtungen (26) sowie ferner einen Trichter (28) und eine Produktausgabevorrichtung (30) umfasst, die eingerichtet ist, das Produkt (104), das mindestens pulverförmige Partikel enthält, aus dem Trichter (28) aufzunehmen, wobei die Produktausgabevorrichtung (30) mit dem Zuführkanal (4) in Verbindung steht, um das Produkt (104) in diesen zu fördern, und der Trichter (28) sowie die Produktausgabevorrichtung (30) auf dem Maschinenrahmen (24) montiert und auf den Wägeeinrichtungen gelagert sind, um das im Sack (100) enthaltene Produkt (104) zu wiegen.

12. Verfahren zum Entfernen von pulverförmigen Partikeln einer Maschine (1) zum Befüllen eines Sackes (100) mit einem Produkt (104), das mindestens pulverförmige Partikel umfasst, **dadurch gekennzeichnet, dass** das Verfahren die folgenden Schritte umfasst:
[a] Bereitstellen eines Zuführkanals (4), der sich entlang einer Längsrichtung (L) zwischen einem Einlassende (6) und einem Auslassende (8) erstreckt und ein Innenvolumen (Vi) definiert, wobei der Zuführkanal (4) so ausgeführt ist, dass er eine Füllöffnung (102) des Sackes (100) am Auslassende (8) passend aufnehmen kann,
[b] wobei der Zuführkanal (4) zwischen dem Einlass- und dem Auslassende (6, 8) weiterhin mindestens
[bi] einen ersten Balgabschnitt (12) und
[bii] einen elastisch verformbaren zweiten Abschnitt (14) umfasst, Bereitstellen ferner von:
[c] Schließmitteln (10), die eingerichtet sind, den zweiten Abschnitt (14) zu verformen,
[d] mindestens einem ersten Linearantrieb (16), der dazu eingerichtet ist, den ersten Balgabschnitt (12) in Längsrichtung (L) zu verformen und funktional mit den Schließmitteln (10) zusammenzuwirken,
[e] Absaugmitteln (18), die fluidisch mit dem Innenvolumen (Vi) des Zuführkanals (4) verbunden sind,
das Verfahren umfasst ferner die weiteren Schritte:
[f] Platzieren der Füllöffnung (102) des Sackes (100) am Auslassende (8) in passender Weise,
[g] Bewegen der Schließmittel (10) in eine Offenstellung,
[h] Befüllen des Sackes (100) mit dem Produkt (104),
[i] Bewegen der Schließmittel (10) mindestens in eine erste Schließstellung, in der die Schließmittel (10) den zweiten Abschnitt (14) zusammendrücken, um dessen Innenquerschnitt zu verringern,
[j] Ausgleichen einer Längenänderung in Längsrichtung (L) des zweiten Abschnitts (14) mit dem ersten Linearantrieb (16), wenn die Schließmittel (10) zwischen der Offen- und der ersten Schließstellung bewegt werden,
[k] Betreiben der Absaugmittel (18), um die im Innenvolumen (Vi) enthaltenen pulverförmigen Partikel zumindest bei Schließmitteln (10) in der ersten Schließstellung zu entfernen.

13. Verfahren nach Anspruch 12, **dadurch gekennzeichnet, dass** die Absaugmittel (18) nach Abschluss des Befüllvorgangs und vor oder nach dem Entfernen des Sackes (100) vom Auslassende (8) betrieben werden.

14. Verfahren nach Anspruch 12 oder 13, **dadurch gekennzeichnet, dass** ausgehend von der ersten Schließstellung und während des Betriebs der Absaugmittel (18) sowie des Entfernens des Sackes (100) vom Auslassende (8), die Schließmittel (10) in eine zweite Schließstellung bewegt werden, in der die Schließmittel (10) den zweiten Abschnitt (14) zusammendrücken, um diesen dicht zu verschließen.

15. Verfahren nach einem der Ansprüche 12 bis 14, **dadurch gekennzeichnet, dass** es weiterhin die Schritte umfasst:
[a] Bereitstellen von mindestens einem zweiten Linearantrieb (22), der dazu eingerichtet ist, die Oberfläche des zweiten Abschnitts (14) zu spannen und funktional mit den Schließmitteln (10) zusammenzuwirken, und
[b] Ausgleichen einer Längenänderung in Längsrichtung (L) des zweiten Abschnitts (14), wenn die Schließmittel (10) zwischen der Offenstellung und der ersten Schließstellung bewegt werden.

## Revendications

1. Dispositif (2) d'élimination de particules pulvérulentes d'une machine (1) destinée à remplir un sac (100) avec un produit (104) comprenant au moins des particules pulvérulentes, ledit dispositif (2) comprenant:
[a] un conduit d'alimentation (4) s'étendant le long d'une direction longitudinale (L) entre une extrémité d'entrée (6) et une extrémité de sortie (8) et définissant un volume interne (Vi), ledit conduit d'alimentation (4) étant configuré pour recevoir une ouverture de remplissage (102) dudit sac (100) au niveau de ladite extrémité de sortie (8) de manière ajustée, dans lequel
[b] ledit conduit d'alimentation (4) comprend en outre entre lesdites première et seconde extrémités (6, 8) au moins
[bi] une première section de soufflet (12) et
[bii] une seconde section (14) déformable élastiquement, ledit dispositif (2) comprenant en outre:
[c] des moyens de fermeture (10), agencés par rapport à ladite seconde section (14) de sorte qu'ils soient mobiles entre:
[ci] une position ouverte, et
[cii] au moins une première position de fermeture, dans laquelle lesdits moyens de fermeture (10) compriment ladite seconde section (14) pour réduire la section transversale intérieure de ladite seconde section (14),
[d] au moins un premier actionneur linéaire (16) agencé pour déformer ladite première section de soufflet (12) en longueur le long de ladite direction longitudinale (L) et pour coopérer fonctionnellement avec lesdits moyens de fermeture (10), de sorte qu'au moins une variation de longueur dans la direction longitudinale (L) de ladite seconde section (14) puisse être compensée, lorsque lesdits moyens de fermeture (10) se déplacent entre ladite position ouverte et ladite première position de fermeture et
[e] des moyens d'aspiration (18) agencés en communication fluidique avec ledit volume interne (Vi) dudit conduit d'alimentation (4), utilisables pour éliminer lesdites particules pulvérulentes contenues dans ledit volume interne (Vi), du moins lorsque lesdits moyens de fermeture (10) sont dans ladite première position de fermeture.

2. Dispositif (2) selon la revendication 1, **caractérisé en ce que** ladite première section de soufflet (12) est agencée en amont de ladite seconde section (14).

3. Dispositif (2) selon les revendications 1 ou 2, **caractérisé en ce qu'**il comprend en outre un guide linéaire (20) pour guider ladite extrémité de sortie (8) dudit conduit d'alimentation (4), lorsque lesdits moyens de fermeture (10) se déplacent entre ladite position ouverte et ladite première position de fermeture.

4. Dispositif (2) selon l'une quelconque des revendications 1 à 3, **caractérisé en ce que** lesdits moyens de fermeture (10) sont mobiles entre:
[ai] une position ouverte,
[aii] au moins une première position de fermeture, dans laquelle lesdits moyens de fermeture (10) compriment ladite seconde section (14) pour réduire la section transversale intérieure de ladite seconde section (14), et
[aiii] une seconde position de fermeture dans laquelle lesdits moyens de fermeture (10) compriment ladite seconde section (14) pour fermer ladite seconde section (14).

5. Dispositif (2) selon l'une quelconque des revendications 1 à 4, **caractérisé en ce qu'**au moins un second actionneur linéaire (22) est agencé pour resserrer la surface de ladite seconde section (14) et pour coopérer fonctionnellement avec lesdits moyens de fermeture (10) et ledit premier actionneur linéaire (16), de sorte qu'au moins une variation de longueur dans la direction longitudinale (L) de ladite seconde section (14) puisse être compensée, lorsque lesdits moyens de fermeture (10) se déplacent entre ladite position ouverte et ladite première position de fermeture.

6. Dispositif (2) selon l'une quelconque des revendications 1 à 5, **caractérisé en ce que** ladite seconde section (14) est fabriquée dans un matériau stratifié élastiquement déformable.

7. Dispositif (2) selon l'une quelconque des revendications 1 à 6, **caractérisé en ce que** lesdits moyens de fermeture (10) comprennent au moins une première pince (28) mobile entre lesdites positions ouverte et fermée desdits moyens de fermeture, ladite seconde section (14) étant agencée par rapport à ladite première pince (28) de manière à être déformée par ladite première pince (28).

8. Dispositif (2) selon la revendication 7, **caractérisé en ce que** lesdits moyens de fermeture (10) comprennent une seconde pince (30), lesdites première et seconde pinces (28, 30) étant agencées en regard l'une de l'autre, ladite seconde section (14) étant agencée entre lesdites première et seconde pinces (28, 30), et **en ce que** lesdites première et seconde pinces (18, 20) sont mobiles l'une par rapport à l'autre entre lesdites positions ouverte et fermée desdits moyens de fermeture (10).

9. Machine (1) destinée à remplir un sac (100) avec un produit (104) comprenant au moins des particules pulvérulentes, **caractérisée en ce qu'**elle comprend un dispositif (2) pour éliminer des particules pulvérulentes selon l'une quelconque des revendications 1 à 8.

10. Machine (1) selon la revendication 9, **caractérisée en ce qu'**elle comprend un bâti (24) de machine et des moyens de pesée (26) et **en ce que** ledit dispositif (2) est monté sur ledit bâti (24) de machine, supporté sur lesdits moyens de pesée (24) pour peser ledit produit (104) contenu dans ledit sac (100).

11. Machine (1) selon la revendication 9, **caractérisée en ce qu'**elle comprend un bâti de machine et des moyens de pesée (26) et comprend en outre une trémie (28) et un dispositif d'alimentation (30) en produit agencé pour recevoir ledit produit (104) comprenant au moins des particules pulvérulentes provenant de ladite trémie (28), ledit dispositif d'alimentation (30) en produit étant en communication avec ledit conduit d'alimentation (4) pour introduire ledit produit (104) dans ledit conduit d'alimentation (4) et **en ce que** ladite trémie (28) et ledit dispositif d'alimentation (30) en produit sont montés sur ledit bâti (24) de machine, supporté sur lesdits moyens de pesée pour peser ledit produit (104) contenu dans ledit sac (100).

12. Méthode d'élimination de particules pulvérulentes d'une machine (1) destinée à remplir un sac (100) avec un produit (104) comprenant au moins des particules pulvérulentes, dans laquelle la méthode comprend les étapes de:
[a] fourniture d'un conduit d'alimentation (4) s'étendant le long d'une direction longitudinale (L) entre une extrémité d'entrée (6) et une extrémité de sortie (8) et définissant un volume interne (Vi), ledit conduit d'alimentation (4) étant configuré pour recevoir une ouverture de remplissage (102) dudit sac (100) au niveau de ladite extrémité de sortie (8) de manière ajustée,
[b] ledit conduit d'alimentation (4) comprenant en outre entre lesdites première et seconde extrémités (6, 8) au moins
[bi] une première section de soufflet (12) et
[bii] une seconde section (14) déformable élastiquement,
étant en outre présents:
[c] des moyens de fermeture (10), agencés pour déformer ladite seconde section (14),
[d] au moins un premier actionneur linéaire (16) agencé pour déformer ladite première section de soufflet (12) en longueur le long de ladite direction longitudinale (L) et pour coopérer fonctionnellement avec lesdits moyens de fermeture (10), et
[e] des moyens d'aspiration (18) agencés en communication fluidique avec ledit volume interne (Vi) dudit conduit d'alimentation (4), la méthode comprenant en outre les étapes de
[f] placement de ladite ouverture de remplissage (102) dudit sac (100) au niveau de ladite extrémité de sortie (8) de manière ajustée,
[g] déplacement desdits moyens de fermeture (10) dans une position ouverte,
[h] remplissage du sac (100) avec ledit produit (104),
[i] déplacement desdits moyens de fermeture (10) au moins dans une première position de fermeture, dans laquelle lesdits moyens de fermeture (10) compriment ladite seconde section (14) pour réduire la section transversale intérieure de ladite seconde section (14),
[j] compensation, avec ledit premier actionneur linéaire (16), d'au moins une variation de longueur dans la direction longitudinale (L) de ladite seconde section (14), lorsque lesdits moyens de fermeture (10) se déplacent entre ladite position ouverte et ladite première position de fermeture,
[k] actionnement desdits moyens d'aspiration (18) pour éliminer lesdites particules pulvérulentes contenues dans ledit volume interne (Vi), du moins lorsque lesdits moyens de fermeture (10) sont dans ladite première position de fermeture.

13. Méthode selon la revendication 12, **caractérisée en ce que** lesdits moyens d'aspiration (18) sont actionnés après achèvement de ladite étape de remplissage et avant ou après le retrait dudit sac (100) de ladite extrémité de sortie (8).

14. Méthode selon la revendication 12 ou 13, **caractérisée en ce qu'**à partir de ladite première position de fermeture et pendant que lesdits moyens d'aspiration (18) sont actionnés et que ledit sac (100) est retiré de ladite extrémité de sortie (8), lesdits moyens de fermeture (10) sont déplacés dans une seconde position de fermeture, dans laquelle lesdits moyens de fermeture (10) compriment ladite seconde section (14) pour fermer hermétiquement ladite seconde section (14).

15. Méthode selon l'une quelconque des revendications 12 à 14, **caractérisée en ce qu'**elle comprend en outre les étapes de
[a] fourniture d'au moins un second actionneur linéaire (22) agencé pour resserrer la surface de ladite seconde section (14) et pour coopérer fonctionnellement avec lesdits moyens de fermeture (10) et
[b] compensation d'au moins une variation de longueur dans la direction longitudinale (L) de ladite seconde section (14), lorsque lesdits moyens de fermeture (10) se déplacent entre ladite position ouverte et ladite première position de fermeture.
